## Europäisches Patentamt

## European Patent Office

## Office européen des brevets

(19)

(11) Veröffentlichungsnummer: **0 121 220**
**B1**

(12)

# EUROPÄISCHE PATENTSCHRIFT

(45) Veröffentlichungstag der Patentschrift:
08.03.89

(21) Anmeldenummer: **84103384.8**

(22) Anmeldetag: **27.03.84**

(51) Int. Cl.⁴: **H 04 M 1/02**

(54) **Fixierung eines Chassis im Gehäuse einer Fernsprechteilnehmerstation.**

(30) Priorität: **30.03.83 DE 3311705**

(43) Veröffentlichungstag der Anmeldung:
**10.10.84 Patentblatt 84/41**

(45) Bekanntmachung des Hinweises auf die Patenterteilung:
**08.03.89 Patentblatt 89/10**

(84) Benannte Vertragsstaaten:
**AT BE CH DE GB LI NL**

(56) Entgegenhaltungen:
**DE-A-3 048 765**
**DE-A-3 311 671**

(73) Patentinhaber: **Siemens Aktiengesellschaft Berlin und München, Wittelsbacherplatz 2, D-8000 München 2 (DE)**

(72) Erfinder: **Awakowicz, Erwin, Richard- Pietzsch-Weg 18, D-8000 München 71 (DE)**
Erfinder: **Kleine, Peter, Dipl.- Ing., Kramerstrasse 9, D-8121 Fischen (DE)**

EP 0 121 220 B1

## Beschreibung

Die vorliegende Erfindung beinhaltet eine Fernsprechteilnehmerstation mit einem Gehäuseunterteil, an dem ein alle wesentlichen Bauteile der Station tragendes Chassis sowie ein Gehäuseoberteil schwenkbar gelagert sind und das Chassis ein Bedienfeld aufweist, das durch einen Ausschnitt im Gehäuseoberteil hindurchragt.

Es ist bereits durch die DE-A-3 048 765 bei Fernsprechteilnehmerstationen bekannt, einen die wesentlichen Bedienungselemente der Station wie Tastatur, Namenstaster, Lautsprecher, Display sowie Sperrschloß aufnehmenden Zwischenträger schwenkbar im Stationsgehäuse zu lagern, um bei Wartungs- oder Umbauarbeiten besser an die einzelnen Teile des Zwischenträgers zu gelangen. Der Zwischenträger besitzt Lagerzapfen, die in Ausnehmungen der Bodenwanne eingreifen.

Diese Art der Lagerung des Zwischenträgers erfordert eine hohe Fertigungsgenauigkeit, da zwischen den Lagerzapfen und den sie aufnehmenden Ausnehmungen nur ein sehr geringes Spiel vorhanden ist. Um dennoch Fertigungstoleranzen ausgleichen zu können, ist eine Bedienelemente (Tasten) tragende Leiterplatte schwimmend in einer wannenartigen Vertiefung des Zwischenträgers gelagert, so daß diese Einheit soweit innerhalb bestimmter Grenzen verschoben werden kann, bis sie den Ausschnitt im Gehäuseoberteil durchgreift.

Bei einer derart gestalteten Station besteht das Problem, das Chassis sowie das Gehäuseoberteil so zueinander auszurichten, daß im zusammengebauten Zustand der Station die genannten Teile in vertikaler und horizontaler Lage zueinander festgelegt sind.

Gemäß der Erfindung kann eine Fixierung des Chassis innerhalb des Stationsgehäuses dadurch erreicht werden, daß das Chassis an dem Gehäuseunterteil in der horizontalen Ebene verschiebbar gelagert ist und im Gehäuseoberteil eine Nase angeordnet ist, die im zusammengebauten Zustand der Fernsprechteilnehmerstation auf einen federnden Lappen am Chassis drückt.

Zum Ausgleich von Fertigungstoleranzen in der horizontalen Ebene ist das Chassis in dieser Ebene verschiebbar gelagert. Beim Zusammenbau der Fernsprechteilnehmerstation wird zunächst das Chassis eingehängt und in Richtung auf das Gehäuseunterteil geschwenkt. Anschließend wird das Gehäuseoberteil am Gehäuseunterteil eingehängt und ebenfalls in Richtung auf das Gehäuseunterteil geschwenkt. Aufgrund der eine Verschiebung in horizontaler Richtung gestattenden Lagerung des Chassis kann dieses solange verschoben werden, bis das Bedienfeld am Chassis innerhalb des Ausschnittes am Gehäuseoberteil lagerichtig angeordnet ist. Die z. B. an ihrem freien Ende keilförmig gestaltete Nase am Gehäuseoberteil wirkt bei Festlegung des Chassis in der vertikalen Ebene auf den federnden Lappen am Chassis ein, wobei Fertigungstoleranzen in dieser Richtung durch den nachgebenden Lappen ausgeglichen werden.

Die Erfindung soll im folgenden anhand eines Ausführungs beispiels erläutert werden.

Es zeigt:

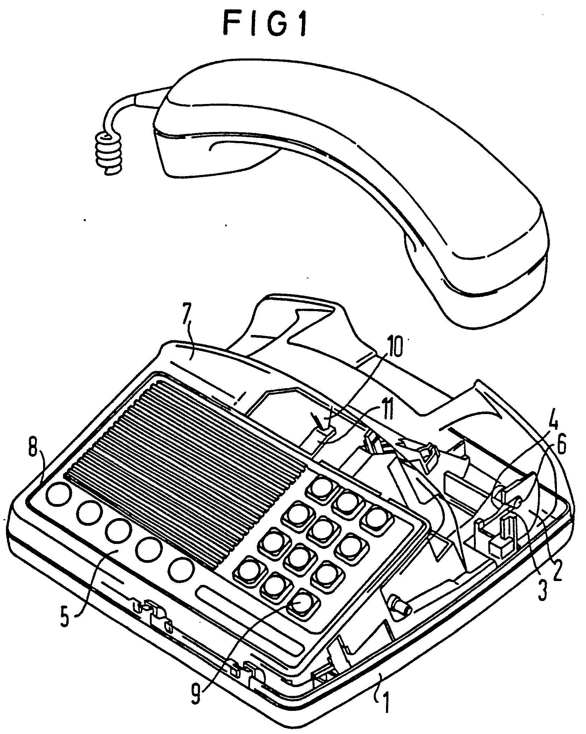

FIG. 1 eine perspektivische Ansicht einer Fernsprechstation, bei der die im Inneren der Station befindlichen interessierenden Teile deutlich herausgestellt worden sind,

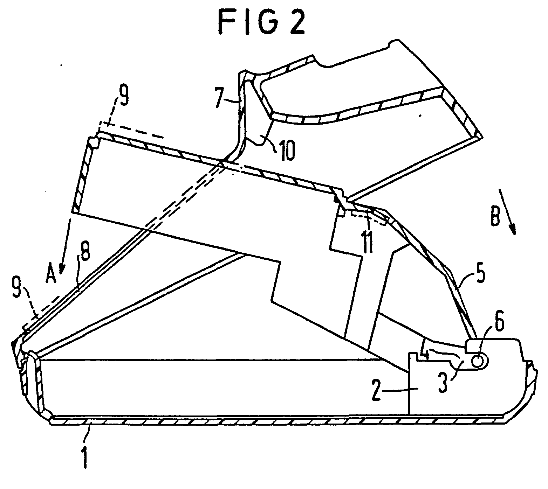

FIG. 2 eine geschnittene Seitenansicht des zwischen Gehäuseoberteil und -unterteil der Fernsprechstation gelagerten Chassis, wobei diese Darstellung nicht der Gebrauchslage der Station entspricht.

Das Gehäuseunterteil 1 einer Fernsprechteilnehmerstation besitzt senkrecht zur Ebene des Unterteils verlaufende Stege 2. In diesen Stegen 2 sind parallel zur Ebene des Unterteils 1 verlaufende Langlöcher 3 angeordnet, die in ihrem dem Unterteil 1 abgewandten Bereich eine partielle Unterbrechung 4 aufweisen. Das alle wesentlichen Bauteile einer Fernsprechteilnehmerstation tragende Chassis 5 besitzt zwei eine Schvenkachse bildende Zapfen 6, die in die Langlöcher 3 eingreifen und somit ein Verschvenken des Chassis zur Durchführung von Wartungs- oder Reparaturarbeiten ermöglichen. An der dem Benutzer zugewandten Vorderseite ist am Gehäuseunterteil 1 das Gehäuseoberteil 7 schwenkbar gelagert. Der Ausschnitt 8 im Gehäuseoberteil 7 nimmt dabei das z. B. die Wähltastatur enthaltende und gestrichelt angedeutete Bedienfeld 9 auf.

Der Zusammenbau der Fernsprechteilnehmerstation erfolgt in der Weise, daß zunächst das Chassis 5 am Gehäuseunterteil eingehängt und in Pfeilrichtung A zum Gehäuseunterteil 1 verschwenkt wird. Darauf wird das Gehäuseoberteil 7 am Gehäuseunterteil 1 eingehängt und in Pfeilrichtung B zum Gehäuseunterteil 1 verschwenkt. Dabei durchgreift das am Chassis angeordnete Bedienfeld 9 den Ausschnitt 8 im Gehäuseoberteil 7 und überragt es geringfügig. Aufgrund der Lagerung des Chassis in Langlöchern läßt sich dieses in horizontaler Richtung verschieben, bis sich das Bedienfeld 9 exakt innerhalb des Ausschnittes befindet. Hierdurch wird eine Ausrichtung des Chassis 5 zum Gehäuseoberteil 7 in der horizontalen Ebene erreicht.

Um eine Fixierung des Chassis in der vertikalen Ebene zu erreichen, ist am Gehäuseoberteil 7 eine an ihrem freien Ende keilförmig gestaltete Nase 10 angeordnet, die im zusammengesetzten Zustand der Teile 1, 5 und 7 auf einen federnden Lappen 11 des Chassis 5 drückt. Die endgültige Verbindung vom Gehäuseoberteil 7 mit dem Gehäuseunterteil 1 kann z. B. durch Verschrauben oder Verrasten dieser beiden Teile erfolgen.

## Patentansprüche

1. Fernsprechteilnehmerstation mit einem Gehäuseunterteil (1), an dem ein alle wesentlichen Bauteile der Station tragendes Chassis (5) sowie ein Gehäuseoberteil (7) schwenkbar gelagert sind und das Chassis (5) ein Bedienfeld (9) aufweist, das durch einen Ausschnitt (8) im Gehäuseoberteil (7) hindurchragt, dadurch gekennzeichnet, daß das Chassis (5) an dem Gehäuseunterteil (1) in der horizontalen Ebene verschiebbar gelagert ist und im Gehäuseoberteil (7) eine Nase (10) angeordnet ist, die im zusammengebauten Zustand der Fernsprechteilnehmerstation auf einen federnden Lappen (11) am Chassis (5) drückt.

2. Fernsprechteilnehmerstation nach Anspruch 1, dadurch gekennzeichnet, daß die Nase (10) am freien Ende keilförmig gestaltet ist.

## Claims

1. Telephone station having a bottom housing part (1) on which a chassis (5) bearing all essential components of the stat ion and also a top housing part (7) are pivotably mounted, and the chassis (5) has an operating panel (9) which projects through an opening (8) in the top housing part (7), characterized in that the chassis (5) is mounted displaceably in the horizontal plane to the bottom housing part (1) and a lug (10) is arranged in the top housing part (7), which lug presses in the assembled state of the telephone station on a resilient tongue (11) on the chassis (5).

2. A telephone station as claimed in claim 1, wherein the lug (10) is tapered towards its free end.

## Revendications

1. Poste téléphonique comportant une partie inférieure (1) d'un boîtier, sur laquelle un châssis (5) portant tous les composants essentiels du poste, ainsi qu'une partie supérieure (7) du boîtier sont montés de façon à pouvoir pivoter, et dans lequel le châssis (5) comporte un panneau de manoeuvre (9) qui pénétre dans une découpe (8) ménagée dans la partie supérieure (7) du boîtier, caractérisé par le fait que le châssis (5) est monté sur la partie inférieure (1) du boîtier de manière à être déplaçable dans le plan horizontal et que dans la partie supérieure (7) du boîtier se trouve disposé un bec (6) qui appuie sur une languette élastique (11) prévue sur le châssis (5), lorsque le poste téléphonique est à l'état assemblé.

2. Poste téléphonique suivant la revendication 1 caractérisé par le fait que le bec (10) est réalisé avec une forme en coin au niveau de son extrémité libre.

# FIG 1

# FIG 2